# EUROPEAN PATENT SPECIFICATION

(11) **EP 3 611 942 B1**
(45) Date of publication and mention of the grant of the patent: **20.01.2021**
(21) Application number: 19201985.9
(22) Date of filing: 28.01.2011
(51) Int. Cl.: H04W 4/029, H04L 29/08

(54) **METHOD, NETWORK ELEMENT AND COMPUTER READABLE MEDIUM FOR HEURISTIC LOCATION TRACKING**
VERFAHREN, NETZWERKELEMENT UND COMPUTERLESBARES MEDIUM ZUR HEURISTISCHEN STANDORTVERFOLGUNG
PROCÉDÉ, ÉLÉMENT DE RÉSEAU ET SUPPORT LISIBLE PAR ORDINATEUR POUR LE SUIVI HEURISTIQUE D'EMPLACEMENT

(43) Date of publication of application: 19.02.2020
(62) Divisional of application: 11152496.3
(73) Proprietor: BlackBerry Limited, Waterloo, Ontario N2K 0A7 (CA)
(72) Inventor: LI, Andrey, Ontario N2K 0A7 (CA)
(74) Representative: Hanna Moore + Curley

(56) References cited:
- US-A1- 2004 156 326
- US-A1- 2004 198 386
- US-A1- 2005 085 257
- US-A1- 2007 026 871
- US-A1- 2010 203 901
- US-A1- 2010 255 856
- US-B1- 6 243 039

## Description

### FIELD OF THE DISCLOSURE

The present disclosure relates to location tracking on a mobile device and in particular to location tracking based on heuristics.

### BACKGROUND

Many mobile devices are now equipped with the ability to determine their location and to report the location to others. While this provides many advantages, it also raises privacy issues, as some applications allow observers to track the location of users anywhere, and anytime.

Specifically, it is useful and desirable to allow observers to track the location of mobile device users in some circumstances. In other circumstances, this ability infringes upon the users' right to privacy.

US 2010/0203901 describes location-based services using geofences generated from learned patterns of movement. Information indicative of location of a mobile device is periodically collected. The collected location information is processed in a server to determine at least one normal pattern of movement of the mobile device from a first location to a second location. An alert is generated if subsequent movement of the mobile device from the first location to the second location exhibits a significant deviation from the normal pattern of movement.
US 2004/156326 describes the use of triggers and a location hypercube to enable push-based location applications. The method estimates the future/updated location of a target locatable based on a previous location of the target locatable, a timestamp of the previous location, and a velocity estimated from successive locations. The estimate may also take into account a street network, anticipated route, and/or traffic conditions, and may be based on the history and profile of the target locatable such as prior routes taken, prior locations visited, etc.

### SUMMARY

According to aspects of the invention, there are provided a method, a network element, and a computer readable medium in accordance with the independent claims. Advantageous features are provided in the dependent claims.

### BRIEF DESCRIPTION OF THE DRAWINGS

The present disclosure will be better understood with reference to the drawings in which:
**Figure 1** is a block diagram showing an exemplary architecture for the method and system of the present disclosure;
**Figure 2** is a block diagram of an exemplary learning method;
**Figure** 3 is a block diagram illustrating the computation of the location profile according to one embodiment and according to examples not covered by the claimed invention;
**Figure 4** is a block diagram of a method according to one embodiment and examples not covered by the claimed invention; and
**Figure 5** is a block diagram of an exemplary user equipment capable of being used with the present method and system.

### DETAILED DESCRIPTION

The present disclosure is described below with regards to various embodiments and examples not covered by the claimed invention. In particular, the present disclosure could be applied to any location determination technology, such as Global Positioning System (GPS), Assisted GPS, and others.

The present disclosure relates to the tracking of at least one device by an observer while still considering privacy issues. This is done by using the tracking device to collect data. The data is then analyzed and compared to heuristic information to determine whether a notification should be triggered. The notification can be sent to an observer. The trigger is based on rules based on positional or other data, as provided below.

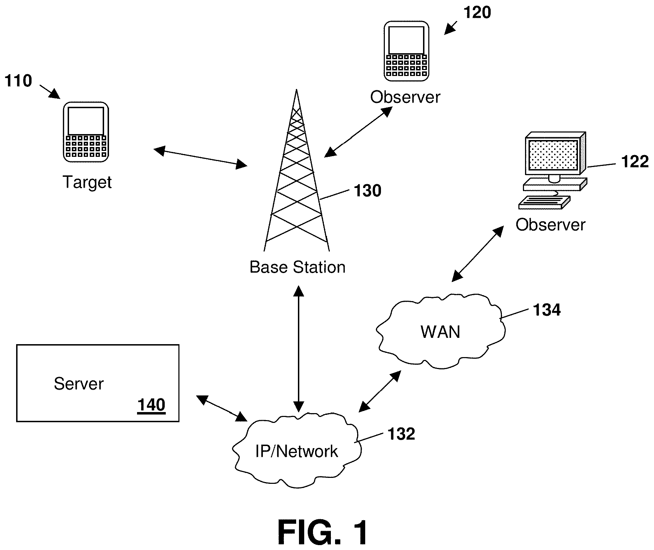

Reference is now made to **Figure 1****,** which shows an exemplary architecture for one example not covered by the claimed invention of a system in accordance with the present disclosure.

In **Figure 1****,** a target device **110** communicates with a mobile network **130.** In one example, target device **110** is a mobile device and network **130** is a wireless network. Such a network can include, but is not limited to a Code Division Multiple Access (CDMA) network, a Global System for Mobile communications (GSM), Universal Mobile Terrestrial System (UMTS), Long Term Evolution (LTE), Long Term Evolution Advanced (LTE-A), among others. In other examples network **130** can include an access point and be a WiFi™ or WiMAX™ system. Other networks 130 will be known to those skilled in the art.

Network **130** can communicate with a further IP network **132** such as the Internet, which may communicate, in some cases, with a wide area network (WAN) **134.**

An observer **120** or **122** can also communicate with network **130** through wired or wireless communication channels. For example, observer **120** may be a mobile device or observer 122 may be a fixed computer.

A server **140** may further communicate with observer **120** or **122** through network **130,** typically through IP network **132.** Server **140** may be used in some examples where privacy requires that raw information not be sent to an observer **120** or **122.**

Target device **110** may be any mobile device. Mobile devices are known to those in the art and can also be referred to as a mobile terminal, mobile station, personal digital assistant, smart phone, laptop, among others.

In the first portion of the present method, which will hereinafter be referred to as the "learning phase", a tracked mobile device collects location information at intervals in order to build a location history, or a location profile, as according to the invention, for the mobile device.

For example, according to a non-limiting embodiment of the present method, a mobile device builds its location history or profile (hereinafter, the terms 'history' and 'profile' are used interchangeably) based on a 24 hour cycle and 1 hour intervals. In this embodiment, the mobile device collects its location data once every hour and analyzes readings made at the same time of day together.

Specifically, if a location reading is taken at 9 AM on a first day, subsequent readings will occur at 10 AM, 11 AM, noon, 1 PM, and so on. For analysis purposes, the location reading taken at 9 AM on the following day will be compared with the location reading taken at 9 am on the first day. As would be appreciated by those skilled in the art, the above is merely an example, and other cycles than 24 hours or other intervals than one hour are also possible.

The length of the learning phase can vary between embodiments and examples not covered by the claimed invention. In a typical example, the learning phase would last for 10 to 20 cycles. In other examples, the learning phase is ongoing and the location profile is continuously refined. In yet another example and according to the invention, the learning phase may continue until certain conditions are met. For example, as required by the invention, the learning phase continues until the standard deviation calculated for each time interval within a cycle is less than a threshold.

The results of the location readings are then stored and analyzed in order to create the user's location profile. In one example, the readings are stored and analyzed on the mobile device. In other examples, the readings are transferred to the observer device for storage and analysis. In yet another example, the readings are transferred to an application server on the network.

In some examples, the readings are transferred to the observer device or an application server using a secure data protocol.

In examples where the readings are transferred to the observer device for storage and analysis, the readings should remain invisible to the user of the observer device, as they represent the raw location data of the tracked mobile device.

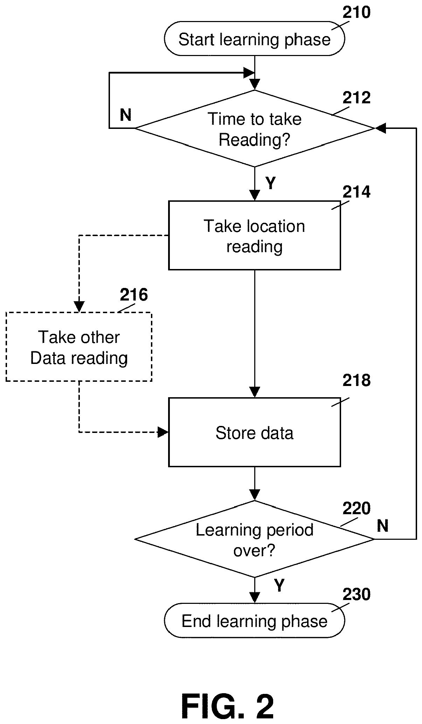

The above is shown, for example, with reference to **Figure 2****.** The process of **Figure 2** starts at block **210** and proceeds to block **212** in which a check is made to determine whether it is time to take a reading. If not the process continues to loop to block **212** until it is time to take a reading. As will be appreciated by those in the art having regard to the present disclosure, the check of block **212** can be implemented in a variety of ways including a timer, an interrupt, among other options.

From block **212,** the process proceeds to block **214** in which a location reading is taken. The location reading of block **214** can utilize an internal Global Positioning System (GPS) within the device, assisted GPS using a base station, an external GPS communicating with the device through short range communications, among other options.

From block **214** the process may optionally proceed to block **216** to collect other heuristic data. For example in block **216** data from an accelerometer may be recorded, data from a temperature sensor may be recorded or other data from external or internal sensors may be utilized. The present disclosure is not limited by any such sensor or data.

From block **216,** or from block **214** if block **216** is not used, the process proceeds to block **218** in which the data is stored. The data may be stored on the device being tracked or may be reported directly to an observer to store the data on the observer's device.

From block **218** the process proceeds to block **220** to check whether the learning period or stage is over. If no the process proceeds to block **212** to determine the next time to take a reading.

If it is determined in block **220** that the learning period is over the process proceeds to block **230** and ends the learning process.

As new readings are taken and stored, the device on which they are stored (the tracked device, observer device, or an application server) performs an analysis to create a location profile for the mobile device.

The purpose of the location profile is to enable the detection of significant deviations from a user's usual traveling habits in order to alert the observer of such a deviation. Accordingly, the location profile can be computed in a number of ways, as long as this objective is achieved.

In one embodiment, described in greater detail below, the location profile is based on a normal distribution of locations for each reading time. Other methods of computing a location profile are also within the scope of the present disclosure.

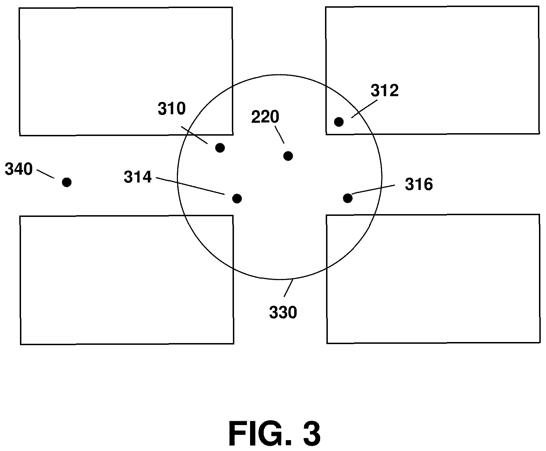

According to the invention, an average position for each interval within the cycle is calculated, as is the standard deviation for the position, using standard statistical techniques. An example is provided in **Figure 3****.**

In **Figure 3****,** location readings **310, 312, 316** and **318** were all made during the learning phase. The average location reading is shown at **320.** A circle **330,** centered around average location **320,** has a radius which is computed as a function of the standard deviation. For example, in one embodiment, the radius of circle **330** is equal to 3 times the standard deviation.

At a time after the learning phase, a location reading **340** is made. As reading **340** is outside of circle **330,** it is deemed to be unusual and the observer is notified. In one example not covered by the claimed invention, the observer is simply notified that the tracked user has deviated from his location profile without providing further details. According to the invention, the observer is notified of the extent by which the tracked user has deviated, and in yet another embodiment and examples, the notification could include the exact location of the tracked user when the reading took place.

In some embodiments, the learning phase might be constrained by rules which would ensure greater data integrity. For example, on some occasions, the user might travel far from its usual destinations, and readings taken on such occasions would contaminate the data.

Accordingly, in one embodiment, the user may be allowed to turn off the learning mode temporarily. In another embodiment, readings which are too far (according to, for example, a threshold value) from an existing average value are simply discarded for the purposes of the learning phase.

Based on the above, a tracked user's behavior is learned.

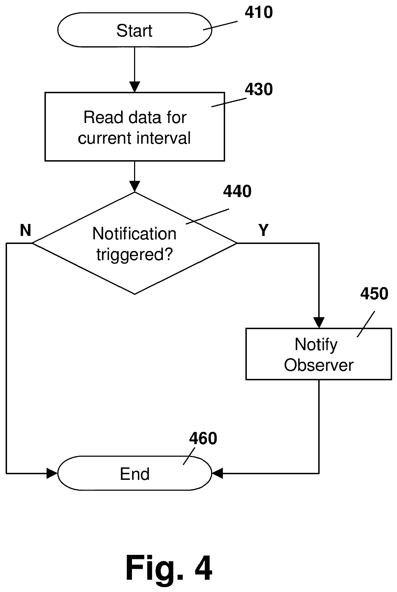

Reference is now made to **Figure 4****,** which shows a block diagram of a method according to the above embodiment. The learning phase of **Figure 2** has been completed prior to the process of **Figure 4** being used.

The process starts at block 410 and proceeds to block **430** in which the tracked mobile device reads its current location. According to the invention, this occurs at fixed times which may or may not correspond to the intervals of the cycle during the learning phase. In other examples, the mobile device may read its current location almost continuously. In yet further examples, the reading may be based on polling by the observer.

From block 430 the process proceeds to block 440, in which a check is made to determine whether the current location is within the expected range. As per the above , the check may be computed at the target device, an application server, or the the observer device. In that case, the current location is sent to the observer device or the application server prior to determining whether the current location is within the expected range.

As discussed above, the expected range is the average location for a given time, plus a function of the standard deviation as computed during the learning phase.

Further, the reading of block **430** and calculation of block **440** can include other data from the target device, such as accelerometer readings, temperature readings, available network readings, battery level, or other data known to the target device.

If the location is within the expected range, or if other rules to trigger a notification are not met, the method ends at block **460** until a new measurement is made. Once the new measurement is made, the process starts again from block **430.**

If the check of block **440** causes a notification trigger, the process proceeds to block **350,** where the observer is notified. From block **450** the process then proceeds to block **360** and ends until another measurement is made.

The above method could be further refined by allowing either the observer or the user to set rules for determining when to notify the observer.

For example, a rule could be set by the observer, so that the observer is notified of only the second deviation by the user in a given day. Another rule could specify a threshold distance from the average location, beyond which the observer would be notified. As would be appreciated by those skilled in the art, in examples such a rule could be set to override the error range computed as a function of the standard deviation.

Yet another kind of rule could allow the observer or the user to define a large area, in which the user is expected to be at given times. For example, if the user is a student at a university, the area corresponding to the university campus could be entered into the system, via the user's mobile device or the observer's mobile device, and the observer would be notified when the user is a certain distance away from the campus at a relevant time.

In some cases, it may be desirable to notify the observer that the tracked mobile device is in a particular location, irrespective of the user's location history. For example, a parent may want to be notified if his or her child is venturing into a dangerous area of a city. In this scenario, the parent could configure the notification application to notify the observer anytime the tracked user enters an area designated as dangerous, or simply prohibited, by the parent.

The above rules are only provided as examples, and any number of rules could be implemented as would be appreciated by those skilled in the art.

The above rules can be implemented in block **440** of **Figure 4** to check whether a rule has been satisfied by the latest reading. As would be appreciated by those skilled in the art, all data pertaining to these rules will need to be transferred from the device on which the rules were entered to the device on which the analysis portion of the method is performed.

In other examples, the present method and apparatus can also learn a profile, and detect deviation from the profile, based on more parameters than just location.

Many mobile devices today are equipped with a whole array of sensors, including but not limited to, accelerometers, sensors for measuring temperature, luminosity, and atmospheric pressure. These sensors can collect data similarly to the location detection means for use in the present method.

For example, temperature data could be collected and correlated with other data such as time, and data from other sensors. The collected data would then be analyzed for pattern recognition, allowing the system to detect future deviations from established patterns.

In one example, temperature data is collected continuously from a temperature sensor on a mobile device. As this data is of significant size, in most cases it will be preferable to store the data locally, however, it may also be advantageous to transfer the data to a server or an observer device for storage.

The stored temperature data is then analyzed for pattern recognition. In one example, the data may reveal a pattern which suggests that for 15 to 20 minutes everyday, around 10:30am, the temperature drops significantly from the temperature observed throughout the day. This could be caused by the user of the mobile device going out during recess at school.

If, at one point after the pattern has been learned by the system, the user of the mobile device fails to go out during recess, or if the user remains outside for significantly longer than usual, the system will detect this deviation from established patterns, and notify an observer.

As would be appreciated by those skilled in the art, the above example is merely illustrative and any type of sensor could be used to collect data. Furthermore, any number of sensor can be used to generate data, and data from various sensors may be correlated against each other in order to extract meaningful patterns.

In these cases, as in the location and temperature cases discussed above, the data from the sensors is stored and analyzed for pattern recognition. When an event deviates significantly from the established patterns, the observer device is notified as described above.

In other examples, an observer device may be notified according to rules set by the observer, as described above with respect to location. Under this scenario, the user of the observer device (also referred to herein as the "observer"), sets conditions based on the various sensor data collected by the observed device. As will be appreciated by those skilled in the art, these conditions may or may not relate to patterns detected during the learning phase. When these conditions are met, the observer device is notified.

The notification may also vary depending on severity. For example, a child leaving a school by foot, as determined by an accelerometer, may trigger a low severity notification to a parent. The notification may simply be that the child has left the school premises at a certain time. Conversely, a child leaving a school by vehicle may cause more concern to a parent, and more information such as the road that the child is on or even the exact location of the child may be provided in this case.

Thus the trigger of block **440** could have various severity levels and the notification of block **450** may provide different information levels based on the severity of the trigger.

Based on the above, a target device **110** may include software or program code to determine a location and other data that may be relevant to an observer. In one example target device may also include software for notifying an observer. In this case, raw data may never be sent across a network and instead the notification software may make a determination of whether an alert or notification should be sent.

In other examples, the target **110** may sent the information to notification software located either on server **140** or on an observer device **120** or **122.** If the information is sent to an observer device **120** or **122,** software within the device may prevent the disclosure of the raw information to the user of the observer device **120** or **122.**

If the raw data is sent to server **140,** server **140** can make the determination, utilizing software on the server **140,** of whether to send a notification to observer **120** or **122.**

In each case, device **110, 120, 122** or **130** include a processor and memory to execute program code to analyze the data and determine whether a notification should be triggered.

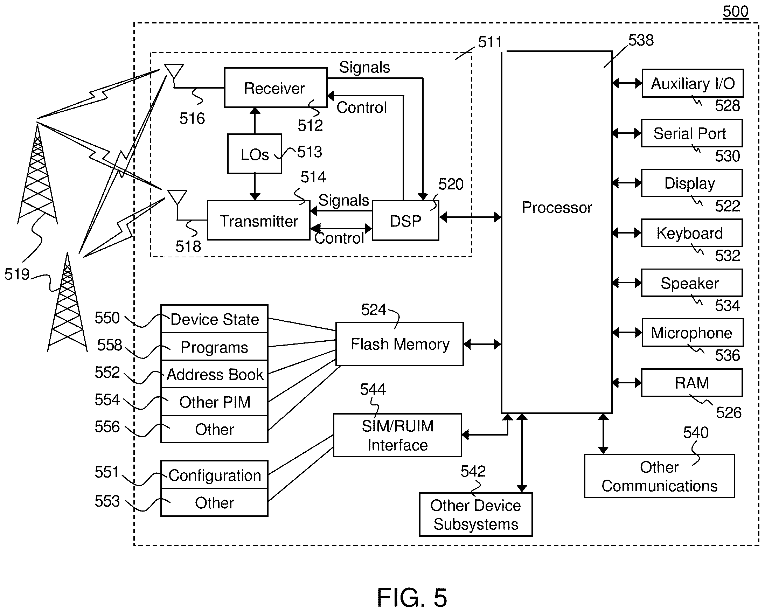

Target device **110** or observer device **120** can be any mobile device. One such exemplary mobile device is illustrated below with reference to **Figure 5****.** The mobile device of **Figure 5** is however not meant to be limiting and other mobile devices could also be used.

Mobile device **500** is typically a two-way wireless communication device having voice and data communication capabilities. Mobile device **500** generally has the capability to communicate with other devices or computer systems. Depending on the exact functionality provided, the mobile device may be referred to as a data messaging device, a two-way pager, a wireless e-mail device, a cellular telephone with data messaging capabilities, a wireless Internet appliance, a wireless device, a user equipment, or a data communication device, as examples.

Where mobile device **500** is enabled for two-way communication, it will incorporate a communication subsystem **511,** including both a receiver **512** and a transmitter **514,** as well as associated components such as one or more antenna elements **516** and **518,** local oscillators (LOs) **513,** and a processing module such as a digital signal processor (DSP) **520.** As will be apparent to those skilled in the field of communications, the particular design of the communication subsystem **511** will be dependent upon the communication network in which the device is intended to operate.

Network access requirements will also vary depending upon the type of network **519.** In some networks, network access is associated with a subscriber or user of mobile device **500.** A mobile device may require a removable user identity module (RUIM) or a subscriber identity module (SIM) card in order to operate on the network. The SIM/RUIM interface **544** may be similar to a card-slot into which a SIM/RUIM card can be inserted and ejected like a diskette or PCMCIA card. The SIM/RUIM card can have memory and hold many key configuration **551,** and other information **553** such as identification, and subscriber related information.

When required network registration or activation procedures have been completed, mobile device **500** may send and receive communication signals over the network **519.** As illustrated in **Figure 5****,** network **519** can consist of multiple base stations communicating with the mobile device. For example, in a hybrid CDMA 1x EVDO system, a CDMA base station and an EVDO base station communicate with the mobile station and the mobile device is connected to both simultaneously. In other systems such as Long Term Evolution (LTE) or Long Term Evolution Advanced (LTE-A), multiple base stations may be connected to for increased data throughput. Other systems such as GSM, GPRS, UMTS, HSDPA, among others are possible and the present disclosure is not limited to any particular cellular technology.

Signals received by antenna **516** through communication network **519** are input to receiver **512,** which may perform such common receiver functions as signal amplification, frequency down conversion, filtering, channel selection and the like, and in the example system shown in **Figure 5****,** analog to digital (A/D) conversion. A/D conversion of a received signal allows more complex communication functions such as demodulation and decoding to be performed in the DSP **520.** In a similar manner, signals to be transmitted are processed, including modulation and encoding for example, by DSP **520** and input to transmitter **514** for digital to analog conversion, frequency up conversion, filtering, amplification and transmission over the communication network **519** via antenna **518.** DSP **520** not only processes communication signals, but also provides for receiver and transmitter control. For example, the gains applied to communication signals in receiver **512** and transmitter **514** may be adaptively controlled through automatic gain control algorithms implemented in DSP **520.**

Mobile device **500** generally includes a processor **538** which controls the overall operation of the device. Communication functions, including data and voice communications, are performed through communication subsystem **511.** Processor **538** also interacts with further device subsystems such as the display **522,** flash memory **524,** random access memory (RAM) **526,** auxiliary input/output (I/O) subsystems **528,** serial port **530,** one or more keyboards or keypads **532,** speaker **534,** microphone **536,** other communication subsystem **540** such as a short-range communications subsystem and any other device subsystems generally designated as **542.** Serial port **530** could include a USB port or other port known to those in the art having the benefit of the present disclosure.

Some of the subsystems shown in **Figure 5** perform communication-related functions, whereas other subsystems may provide "resident" or on-device functions. Notably, some subsystems, such as keyboard **532** and display **522,** for example, may be used for both communication-related functions, such as entering a text message for transmission over a communication network, and device-resident functions such as a calculator or task list, among other applications.

Operating system software used by the processor **538** may be stored in a persistent store such as flash memory **524,** which may instead be a read-only memory (ROM) or similar storage element (not shown). Those skilled in the art will appreciate that the operating system, specific device applications, or parts thereof, may be temporarily loaded into a volatile memory such as RAM **526.** Received communication signals may also be stored in RAM **526.**

As shown, flash memory **524** can be segregated into different areas for both computer programs **558** and program data storage **550, 552, 554** and **556.** These different storage types indicate that each program can allocate a portion of flash memory **524** for their own data storage requirements. The applications may be segregated based on the mode or category they fall into. Memory **524** may further provide security for corporate data and if some applications are locked while others are not.

Processor **538,** in addition to its operating system functions, may enable execution of software applications on the mobile device. A predetermined set of applications that control basic operations, including at least data and voice communication applications for example, will normally be installed on mobile device **500** during manufacturing. Other applications could be installed subsequently or dynamically.

Applications and software, such as those for implements the process of **Figure 2****,** **3** and **4****,** may be stored on any computer readable storage medium. The computer readable storage medium may be a tangible or intransitory/non-transitory medium such as optical (e.g., CD, DVD, etc.), magnetic (e.g., tape) or other memory known in the art.

One software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application may have the ability to send and receive data items, via the wireless network **519.** In one embodiment, the PIM data items are seamlessly integrated, synchronized and updated, via the wireless network **519,** with the mobile device user's corresponding data items stored or associated with a host computer system. Further applications may also be loaded onto the mobile device **500** through the network **519,** an auxiliary I/O subsystem **528,** serial port **530,** short-range communications subsystem **540** or any other suitable subsystem **542,** and installed by a user in the RAM **526** or a non-volatile store (not shown) for execution by the processor **538.** Such flexibility in application installation increases the functionality of the device and may provide enhanced on-device functions, communication-related functions, or both. For example, secure communication applications may enable electronic commerce functions and other such financial transactions to be performed using the mobile device **500.**

In a data communication mode, a received signal such as a text message or web page download will be processed by the communication subsystem **511** and input to the processor **538,** which may further process the received signal for output to the display **522,** or alternatively to an auxiliary I/O device **528.**

A user of mobile device **500** may also compose data items such as email messages for example, using the keyboard **532,** which may be a complete alphanumeric keyboard or telephone-type keypad, among others, in conjunction with the display **522** and possibly an auxiliary I/O device **528.** Such composed items may then be transmitted over a communication network through the communication subsystem **511.**

For voice communications, overall operation of mobile device **500** is similar, except that received signals would typically be output to a speaker **534** and signals for transmission would be generated by a microphone **536.** Alternative voice or audio I/O subsystems, such as a voice message recording subsystem, may also be implemented on mobile device **500.** Although voice or audio signal output is preferably accomplished primarily through the speaker **534,** display **522** may also be used to provide an indication of the identity of a calling party, the duration of a voice call, or other voice call related information for example.

Serial port **530** in **Figure 5** would normally be implemented in a personal digital assistant (PDA)-type mobile device for which synchronization with a user's desktop computer (not shown) may be desirable, but is an optional device component. Such a port **530** would enable a user to set preferences through an external device or software application and would extend the capabilities of mobile device **500** by providing for information or software downloads to mobile device **500** other than through a wireless communication network. The alternate download path may for example be used to load an encryption key onto the device through a direct and thus reliable and trusted connection to thereby enable secure device communication. As will be appreciated by those skilled in the art, serial port **530** can further be used to connect the mobile device to a computer to act as a modem.

Other communications subsystems **540,** such as a short-range communications subsystem, is a further optional component which may provide for communication between mobile device **500** and different systems or devices, which need not necessarily be similar devices. For example, the subsystem **540** may include an infrared device and associated circuits and components or a Bluetooth™ communication module to provide for communication with similarly enabled systems and devices.

The embodiments described herein are examples of structures, systems or methods having elements corresponding to elements of the techniques of this application.

## Claims

1. A method at a network element (500) comprising:
generating and maintaining, in a memory of the network element, a location profile of a target mobile device (110) based on location information provided by the target mobile device at the same time period within each of a plurality of time cycles, and received by the network element using a communication subsystem (511) of the network element, wherein the location profile is generated by computing, using a processor (538) of the network element, an average and a standard deviation of the location for each time period within the time cycle during a learning phase and wherein the learning phase is continued until the standard deviation calculated for each time period within a cycle is less than a threshold, the location profile including an expected location and an error range for each time period of the received location information;
receiving (430), using the communication subsystem, a current location of the target mobile device (110);
comparing the current location of the target mobile device (110) with the location profile; and
providing (450), using the communication subsystem, a notification to an observer device (120, 122) if the current location of the target mobile device deviates from the location profile, the notification including a deviation distance value.

2. The method of claim 1, wherein the comparing comprises:
looking up the expected location and the error range for a current time period of the time cycle; and
determining whether the current location is within an area defined by the expected location and the expected error range.

3. The method of claim 2, wherein generating the location profile further comprises :
during each time period of the time cycle, and for N time cycles, obtaining the current location of the target mobile device;
wherein N is a positive integer; and preferably wherein the error range for each time period of the time cycle is a function of the standard deviation for the time period.

4. The method of claim 1, further comprising:
maintaining a list of prohibited geographical areas; and
during the comparing, if the current location is within a prohibited area of the list of prohibited geographical areas, notifying the observer device (120, 122).

5. The method of claim 1, wherein the comparing further comprises:
evaluating each one of a set of rules based on said current location;
if at least one rule of the set of rules is satisfied during the evaluating step,
notifying the observer device.

6. The method of claim 1, further comprising receiving supplementary data for the target mobile device (110), wherein the comparing further utilizes the supplementary data in determining whether to trigger a notification; and preferably wherein the comparing utilizes rules related to the supplementary data and current location to determine whether to trigger the notification.

7. The method of claim 1, wherein the observer device (120, 122) is at least one of a mobile device or a computer.

8. A network element (500) comprising:
a communication subsystem (511);
a processor (538); and
a memory;
wherein the network element is configured to:
generate and maintain, in a memory of the network element, a location profile of a target mobile device (110) based on location information provided by the target mobile device (110) at the same time period within each of a plurality of time cycles, wherein the location profile is generated by computing, using the processor (538) of the network element, an average and a standard deviation of the location for each time period within the time cycle during a learning phase and wherein the learning phase is continued until the standard deviation calculated for each time period within a cycle is less than a threshold, the location profile including an expected location and an error range for each time period of the received location information;
receive (430), using the communication subsystem, a current location of the target mobile device (430);
compare a current location of the target mobile device with the location profile; and
provide (450) a notification to an observer device (120, 122) if the current location of the target mobile device deviates from the location profile, the notification including a deviation distance value.

9. The network element of claim 8, wherein the network element (500) is configured to compare by:
looking up the expected location and the error range for a current time period of the time cycle; and
determining whether the current location is within an area defined by the expected location and the expected error range.

10. The network element of claim 9, wherein the network element being configured to generate the location profile further comprises:
during each time period of the time cycle, and for N time cycles, obtaining the current location of the target mobile device;
wherein N is a positive integer; and preferably wherein the error range for each time period of the time cycle is a function of the standard deviation for the time period.

11. The network element of claim 8, wherein the network element is further configured to:
maintain a list of prohibited geographical areas; and
if the current location is within a prohibited area of the list of prohibited geographical areas, notify the observer device(120, 122).

12. The network element of claim 8, wherein the network element is further configured to:
evaluate each one of a set of rules based on said current location;
if at least one rule of the set of rules is satisfied during the evaluation,
notify the observer device.

13. The network element of claim 8, wherein the network element is further configured to receive supplementary data for the target mobile device, wherein the network element is configured to compare by using the supplementary data in determining whether to trigger a notification.

14. The network element of claim 13, wherein the network element is configured to compare by using rules related to the supplementary data and current location to determine whether to trigger the notification.

15. A computer readable medium having computer readable instructions stored thereon for execution on a network element (500) so as to implement the method of any one of claims 1-7.

## Patentansprüche

1. Verfahren an einem Netzelement (500), Folgendes umfassend:
Erzeugen und Verwalten, in einem Speicher des Netzelements, eines Standortsprofils einer Zielmobilvorrichtung (110) basierend auf Standortsinformationen, die durch die Zielmobilvorrichtung zu dem gleichen Zeitraum innerhalb jedes von mehreren Zeitzyklen bereitgestellt und durch das Netzelement unter Verwendung eines Kommunikationssubsystems (511) des Netzelements empfangen werden, wobei das Standortprofil durch Berechnen, unter Verwendung eines Prozessors (538) des Netzelements, eines Durchschnitts und einer Standardabweichung des Standortes für jeden Zeitraum innerhalb des Zeitzyklus während einer Lernphase erzeugt wird und wobei die Lernphase fortgesetzt wird, bis die Standardabweichung, die für jeden Zeitraum innerhalb eines Zyklus berechnet wird, kleiner als ein Schwellenwert ist, wobei das Standortsprofil einen erwarteten Standort und einen Fehlerbereich für jeden Zeitraum der empfangenen Standortsinformationen beinhaltet;
Empfangen (430), unter Verwendung des Kommunikationssubsystems, eines aktuellen Standortes der Zielmobilvorrichtung (110);
Vergleichen des aktuellen Standortes der Zielmobilvorrichtung (110) mit dem Standortprofil; und
Bereitstellen (450), unter Verwendung des Kommunikationssubsystems, einer Benachrichtigung an eine Beobachtervorrichtung (120, 122), falls der aktuelle Standort der Zielmobilvorrichtung von dem Standortprofil abweicht, wobei die Benachrichtigung einen Abweichungsabstandswert beinhaltet.

2. Verfahren nach Anspruch 1, wobei das Vergleichen Folgendes umfasst:
Nachschlagen des erwarteten Standortes und des Fehlerbereichs für einen aktuellen Zeitraum des Zeitzyklus; und
Bestimmen, ob der aktuelle Standort innerhalb eines Gebietes liegt, das durch den erwarteten Standort und den erwarteten Fehlerbereich definiert ist.

3. Verfahren nach Anspruch 2, wobei das Erzeugen des Standortsprofils ferner Folgendes umfasst:
während jedes Zeitraums des Zeitzyklus und für N Zeitzyklen, Erhalten des aktuellen Standortes der Zielmobilvorrichtung;
wobei N eine positive ganze Zahl ist; und
vorzugsweise wobei der Fehlerbereich für jeden Zeitraum des Zeitzyklus von der Standardabweichung für den Zeitraum abhängig ist.

4. Verfahren nach Anspruch 1, ferner Folgendes umfassend:
Verwalten einer Liste verbotener geografischer Gebiete; und
während des Vergleichen, falls sich der aktuelle Standort innerhalb eines verbotenen Gebietes der Liste der verbotenen geografischen Gebiete befindet, Benachrichtigen der Beobachtervorrichtung (120, 122).

5. Verfahren nach Anspruch 1, wobei das Vergleichen Folgendes umfasst:
Bewerten jedes einzelnen aus einem Regelsatz basierend auf dem aktuellen Standort;
falls wenigstens eine Regel des Regelsatzes während des Bewertungsschritts erfüllt wird, Benachrichtigen der Beobachtervorrichtung.

6. Verfahren nach Anspruch 1, ferner umfassend das Empfangen von Ergänzungsdaten für die Zielmobilvorrichtung (110), wobei das Vergleichen die Ergänzungsdaten ferner beim Bestimmen, ob eine Benachrichtigung ausgelöst werden soll, nutzt; und vorzugsweise wobei das Vergleichen Regeln nutzt, die sich auf die Ergänzungsdaten und den aktuellen Standort beziehen, um zu bestimmen, ob die Benachrichtigung ausgelöst werden soll.

7. Verfahren nach Anspruch 1, wobei die Beobachtervorrichtung (120, 122) eine Mobilvorrichtung und/oder ein Computer ist.

8. Netzelement (500), Folgendes umfassend:
ein Kommunikationssubsystem (511);
einen Prozessor (538); und
einen Speicher;
wobei das Netzelement zu Folgendem konfiguriert ist:
Erzeugen und Verwalten, in einem Speicher des Netzelements, eines Standortprofils einer Zielmobilvorrichtung (110) basierend auf Standortinformationen, die durch die Zielmobilvorrichtung (110) zu dem gleichen Zeitraum innerhalb jedes von mehreren Zeitzyklen bereitgestellt werden, wobei das Standortsprofil durch Berechnen, unter Verwendung des Prozessors (538) des Netzelements, eines Durchschnitts und einer Standardabweichung des Standortes für jeden Zeitraum innerhalb des Zeitzyklus während einer Lernphase erzeugt wird und wobei die Lernphase fortgesetzt wird, bis die Standardabweichung, die für jeden Zeitraum innerhalb eines Zyklus berechnet wird, kleiner als ein Schwellenwert ist, wobei das Standortprofil einen erwarteten Standort und einen Fehlerbereich für jeden Zeitraum der empfangenen Standortinformationen beinhaltet;
Empfangen (430), unter Verwendung des Kommunikationssubsystems, eines aktuellen Standortes der Zielmobilvorrichtung (430);
Vergleichen eines aktuellen Standortes der Zielmobilvorrichtung mit dem Standortprofil; und
Bereitstellen (450) einer Benachrichtigung an eine Beobachtervorrichtung (120, 122), falls der aktuelle Standort der Zielmobilvorrichtung von dem Standortprofil abweicht, wobei die Benachrichtigung einen Abweichungsabstandswert beinhaltet.

9. Netzelement nach Anspruch 8, wobei das Netzelement (500) konfiguriert ist, um durch Folgendes zu vergleichen:
Nachschlagen des erwarteten Standortes und des Fehlerbereichs für einen aktuellen Zeitraum des Zeitzyklus; und
Bestimmen, ob der aktuelle Standort innerhalb eines Gebietes liegt, das durch den erwarteten Standort und den erwarteten Fehlerbereich definiert ist.

10. Netzelement nach Anspruch 9, wobei das Netzelement, das konfiguriert ist, um das Standortprofil zu erzeugen, ferner Folgendes umfasst:
während jedes Zeitraums des Zeitzyklus und für N Zeitzyklen, Erhalten des aktuellen Standortes der Zielmobilvorrichtung;
wobei N eine positive ganze Zahl ist; und vorzugsweise wobei der Fehlerbereich für jeden Zeitraum des Zeitzyklus von der Standardabweichung für den Zeitraum abhängig ist.

11. Netzelement nach Anspruch 8, wobei das Netzelement ferner zu Folgendem konfiguriert ist:
Verwalten einer Liste verbotener geografischer Gebiete; und
falls sich der aktuelle Standort innerhalb eines verbotenen Gebietes der Liste der verbotenen geografischen Gebiete befindet, Benachrichtigen der Beobachtervorrichtung (120, 122).

12. Netzelement nach Anspruch 8, wobei das Netzelement ferner zu Folgendem konfiguriert ist:
Bewerten jedes einzelnen aus einem Regelsatz basierend auf dem aktuellen Standort;
falls wenigstens eine Regel des Regelsatzes während des Bewertungsschritts erfüllt ist, Benachrichtigen der Beobachtervorrichtung.

13. Netzelement nach Anspruch 8, wobei das Netzelement ferner konfiguriert ist, um Ergänzungsdaten für die Zielmobilvorrichtung zu empfangen, wobei das Netzwerkelement konfiguriert ist, um durch das Verwenden der Ergänzungsdaten beim Bestimmen, ob eine Benachrichtigung ausgelöst werden soll, zu vergleichen.

14. Netzelement nach Anspruch 13, wobei das Netzelement konfiguriert ist, um unter Verwendung von Regeln, die sich auf die Ergänzungsdaten und den aktuellen Standort beziehen, zu vergleichen, um zu bestimmen, ob die Benachrichtigung ausgelöst werden soll.

15. Computerlesbares Medium, auf dem computerlesbare Anweisungen für eine Ausführung auf einem Netzelement (500) gespeichert sind, um das Verfahren nach einem der Ansprüche 1-7 zu implementieren.

## Revendications

1. Procédé au niveau d'un élément de réseau (500) comprenant :
la génération et le maintien, dans une mémoire de l'élément de réseau, d'un profil d'emplacement d'un dispositif mobile cible (110) sur la base d'informations d'emplacement fournies par le dispositif mobile cible à la même période à l'intérieur de chacun d'une pluralité de cycles temporels, et reçues par l'élément de réseau à l'aide d'un sous-système de communication (511) de l'élément de réseau, le profil d'emplacement étant généré en calculant, à l'aide d'un processeur (538) de l'élément de réseau, une moyenne et un écart-type de l'emplacement pour chaque période à l'intérieur du cycle temporel pendant une phase d'apprentissage et la phase d'apprentissage se poursuivant jusqu'à ce que l'écart-type calculé pour chaque période à l'intérieur d'un cycle soit inférieur à un seuil, le profil d'emplacement comportant un emplacement attendu et une plage d'erreur pour chaque période des informations d'emplacement reçues ;
la réception (430), à l'aide du sous-système de communication, d'un emplacement actuel du dispositif mobile cible (110) ;
la comparaison de l'emplacement actuel du dispositif mobile cible (110) au profil d'emplacement ; et
la fourniture (450), à l'aide du sous-système de communication, d'une notification à un dispositif observateur (120, 122) si l'emplacement actuel du dispositif mobile cible s'écarte du profil d'emplacement, la notification comportant une valeur de distance d'écart.

2. Procédé selon la revendication 1, dans lequel la comparaison comprend :
la recherche de l'emplacement attendu et de la plage d'erreur pour une période actuelle du cycle temporel ; et
le fait de déterminer si l'emplacement actuel se trouve à l'intérieur d'une zone définie par l'emplacement attendu et par la plage d'erreur attendue.

3. Procédé selon la revendication 2, dans lequel la génération du profil d'emplacement comprend en outre :
pendant chaque période du cycle temporel, et pendant N cycles temporels, l'obtention de l'emplacement actuel du dispositif mobile cible ;
N étant un entier positif ; et
de préférence, la plage d'erreur pour chaque période du cycle temporel étant une fonction de l'écart-type pour la période.

4. Procédé selon la revendication 1, comprenant en outre :
le maintien d'une liste de zones géographiques interdites ; et
lors de la comparaison, si l'emplacement actuel se trouve à l'intérieur d'une zone interdite de la liste de zones géographiques interdites, la notification au dispositif observateur (120, 122).

5. Procédé selon la revendication 1, dans lequel la comparaison comprend en outre :
l'évaluation de chacune d'un ensemble de règles sur la base dudit emplacement actuel ;
si au moins une règle de l'ensemble de règles est satisfaite lors de l'étape d'évaluation, la notification au dispositif observateur.

6. Procédé selon la revendication 1, comprenant en outre la réception de données supplémentaires pour le dispositif mobile cible (110), la comparaison utilisant en outre les données supplémentaires afin de déterminer s'il faut déclencher une notification ; et
de préférence, la comparaison utilisant des règles liées aux données supplémentaires et à l'emplacement actuel afin de déterminer s'il faut déclencher la notification.

7. Procédé selon la revendication 1, dans lequel le dispositif observateur (120, 122) est un dispositif mobile et/ou un ordinateur.

8. Élément de réseau (500) comprenant :
un sous-système de communication (511) ;
un processeur (538) ; et
une mémoire ;
l'élément de réseau étant configuré pour :
générer et maintenir, dans une mémoire de l'élément de réseau, un profil d'emplacement d'un dispositif mobile cible (110) sur la base d'informations d'emplacement fournies par le dispositif mobile cible (110) à la même période à l'intérieur de chacun d'une pluralité de cycles temporels, le profil d'emplacement étant généré en calculant, à l'aide du processeur (538) de l'élément de réseau, une moyenne et un écart-type de l'emplacement pour chaque période à l'intérieur du cycle temporel pendant une phase d'apprentissage et la phase d'apprentissage se poursuivant jusqu'à ce que l'écart-type calculé pour chaque période à l'intérieur d'un cycle soit inférieur à un seuil, le profil d'emplacement comportant un emplacement attendu et une plage d'erreur pour chaque période des informations d'emplacement reçues ;
recevoir (430), à l'aide du sous-système de communication, un emplacement actuel du dispositif mobile cible (430) ;
comparer un emplacement actuel du dispositif mobile cible au profil d'emplacement ; et
fournir (450) une notification à un dispositif observateur (120, 122) si l'emplacement actuel du dispositif mobile cible s'écarte du profil d'emplacement, la notification comportant une valeur de distance d'écart.

9. Élément de réseau selon la revendication 8, dans lequel l'élément de réseau (500) est configuré pour comparer par :
la recherche de l'emplacement attendu et de la plage d'erreur pour une période actuelle du cycle temporel ; et
le fait de déterminer si l'emplacement actuel se trouve à l'intérieur d'une zone définie par l'emplacement attendu et par la plage d'erreur attendue.

10. Élément de réseau selon la revendication 9, dans lequel l'élément de réseau étant configuré pour générer le profil d'emplacement comprend en outre :
pendant chaque période du cycle temporel, et pendant N cycles temporels, l'obtention de l'emplacement actuel du dispositif mobile cible ;
N étant un entier positif ; et
de préférence, la plage d'erreur pour chaque période du cycle temporel étant une fonction de l'écart-type pour la période.

11. Élément de réseau selon la revendication 8, dans lequel l'élément de réseau est en outre configuré pour :
maintenir une liste des zones géographiques interdites ; et
si l'emplacement actuel se trouve à l'intérieur d'une zone interdite de la liste de zones géographiques interdites, notifier le dispositif observateur (120, 122).

12. Élément de réseau selon la revendication 8, dans lequel l'élément de réseau est en outre configuré pour :
évaluer chacune d'un ensemble de règles sur la base dudit emplacement actuel ;
si au moins une règle de l'ensemble de règles est satisfaite lors de l'évaluation, notifier le dispositif observateur.

13. Élément de réseau selon la revendication 8, dans lequel l'élément de réseau est en outre configuré pour recevoir des données supplémentaires pour le dispositif mobile cible, l'élément de réseau étant configuré pour comparer à l'aide des données supplémentaires afin de déterminer s'il faut déclencher une notification.

14. Élément de réseau selon la revendication 13, dans lequel l'élément de réseau est configuré pour comparer à l'aide des règles liées aux données supplémentaires et à l'emplacement actuel afin de déterminer s'il faut déclencher la notification.

15. Support lisible par ordinateur sur lequel sont stockées des instructions lisibles par ordinateur pour une exécution sur un élément de réseau (500) de manière à mettre en œuvre le procédé selon l'une quelconque des revendications 1 à 7.
